# EUROPEAN PATENT SPECIFICATION

(11) **EP 3 154 361 B1**
(45) Date of publication and mention of the grant of the patent: **25.10.2017**
(21) Application number: 15708533.3
(22) Date of filing: 10.03.2015
(51) Int. Cl.: A23D 9/007, A23D 9/013, A23L 5/10, A23D 9/00

(54) **LIQUID EDIBLE FRYING MEDIUM**
FLÜSSIGE VERZEHRBARE BRATMEDIEN
MILIEU DE FRITURE COMESTIBLE LIQUIDE

(30) Priority: 22.04.2014 EP 14165434
(43) Date of publication of application: 19.04.2017
(73) Proprietor: UNILEVER N.V., 3013 AL Rotterdam (NL); Unilever PLC, London, Greater London EC4Y 0DY (GB); Unilever BCS Limited, London, EC4Y 0DY (GB); Unilever BCS Europe B.V., 3013 AL Rotterdam (NL)
(72) Inventor: SAUER, Anne, NL-3133 AT Vlaardingen (NL); WIERSMA, Jonna, Aleide, NL-3133 AT Vlaardingen (NL)
(74) Representative: Wurfbain, Gilles L.
(86) International application number: PCT/EP2015/054898
(87) International publication number: WO 2015/161953

(56) References cited:
- EP-A1- 2 649 885
- WO-A1-02/49444
- WO-A1-2005/058067
- FR-A1- 2 951 907
- GB-A- 2 276 629
- US-A- 3 245 802
- US-A- 5 397 592
- DATABASE GNPD [Online] MINTEL; February 1998 (1998-02), Anonymous: "Beur Culinair", XP002730406, Database accession no. 58768
- MADSEN J: "Emulsifiers Used in Margarine, Low Calorie Spread, Shortening, Bakery Compound and Filling", FAT SCIENCE TECHNOLOGY,, vol. 89, no. 4, 1 April 1987 (1987-04-01), pages 165-167, XP001343373,

## Description

### Field of the invention

The present invention is directed to liquid edible frying medium.

### Background of the invention

Edible fat continuous products, such as butter, margarines, cooking oils and liquid margarines are well known. These products can be used as frying medium for shallow or deep frying of foods, such as vegetables and meats. For shallow frying only a thin layer of heated frying medium is used to fry food products. Nowadays, frying media which are liquid at ambient temperatures are preferred by consumers as they are easy to handle. Liquid frying media typically comprise mostly (if not completely) of liquid vegetable oil(s). Many consumers prefer liquid frying media which look and behave like refined (pure) vegetable oils (e.g. refined olive oil and sunflower oil) as these are perceived as natural and healthy.

Liquid frying media, such as cooking oils and liquid margarines can contain anti-spattering ingredients to reduce spattering by hot oil during pre-heating of the oil and during frying. Usually a distinction is made between primary spattering (as may be measured in SV1 value) and secondary spattering (as may be measured in SV2 value) (see for example WO2005/058067). Primary spattering is mostly associated with frying medium having a dispersed water-phase. When heating the frying medium the dispersed water phase can become superheated and evaporate under more or less spattering. With secondary spattering is meant the spattering which occurs when water (e.g. in the form of a water containing food product) is placed into hot frying medium, having a temperature above the boiling point of water.

Madsen et. al., Emulsifiers Used in Margarine, Low Calorie Spread, Shortening, Bakery Compound and Filing, Fat Science Technology No. 4, 1987; mentions several measures to reduce spattering. These include the addition of emulsifiers (in particular mono-, and diglycerides, lecithins and citric esters of monoglycerides), salt, milk at high pH, aeration and the addition of egg yolk.

It was observed that addition of such anti-spattering emulsifiers, such as lecithin, to vegetable oil based frying medium leads to the occurrence of a persistent foam during frying. Such persistent foam during frying is not observed with refined vegetable oils without added emulsifiers.

Foam formation during (pre-heating of the frying medium and during) shallow frying is undesirable as the foam has an unattractive appearance. Furthermore, it can be perceived as artificial by consumers as being distinct from the behaviour of pure refined vegetable oil and thus as indicative of a less natural and healthy product by consumers. In addition, it is considered that foam formation during frying can negatively impact contact between the frying medium and the food product. This in turn may lead to uneven frying of the food product and/or the requirement for longer frying times, which increases energy consumption.

It is an object of the present invention to provide liquid frying media comprising anti-spattering emulsifiers, preferably lecithin, which show good primary and/or secondary spattering and a reduced foaming during pre-heating of the liquid frying media and/or during frying of foods.

It is a further object of the invention to provide liquid frying media with such spattering and foaming behaviour, which resemble refined pure vegetable oils in appearance and behaviour during cooking.

It is a further object of the invention to provide liquid frying media with such spattering and foaming behaviour, which comprise low levels of salt.

### Summary of the invention

It was found that one or more of these objectives are achieved, at least in part, by a liquid edible oil continuous frying medium comprising:
- from 2 to 15 wt. % of milk fat fraction with a melting point of at most 20 degrees Celsius;
- at least 70 wt. % of liquid vegetable oil;
- from 0.1 to 0.55 wt. % of anti-spattering emulsifier;
- from 0.1 to 1.2 wt. % of particulate anti-spattering agent;
- at most 3 wt. % of water-phase;
- at most 0.5 wt. % of protein,
wherein the anti-spattering emulsifier is selected from lecithin, monoglycerides, diglycerides, citric acid esters or combinations thereof. It was observed that use of a composition according to the invention as shallow frying medium showed good primary and secondary spattering and surprisingly a reduced amount of foaming both during pre-heating and the shallow frying of foods.
Furthermore the composition had an (transparent) appearance similar to that of pure refined vegetable oil, such as sunflower oil.

In comparison:
- refined sunflower oil without any added non-spattering emulsifier showed poor secondary spattering behavior (i.e. a lot of hot oil spattering).
- refined sunflower oil to which lecithin was added showed a high amount of foaming during the frying of foods.
- refined sunflower oil to which lecithin was added and having a water content above 3 wt.% showed foaming during pre-heating (before adding foodstuffs) and during frying.
The use of milk fat fraction with a melting point of at most 20 degrees Celsius in the composition according to the invention is important to reduce foam formation. However, addition of such low melting milk fat fractions in amounts above 15 wt. % lead to overly strong (and undesirable) butter flavors. It is considered that the combination of anti-spattering emulsifier (e.g. lecithin), particulate anti-spattering agent (e.g. salt); low amount of water-phase, the low amount of protein and the presence of the low melting milk fat fraction all contribute to good primary and secondary spattering behavior while resulting in little or no foam formation.
The invention further relates to the use of the milk fat fraction with a melting point of at most 20 degrees Celsius to reduce foam formation (i.e. as anti-foaming agent).

### Brief description of the Figures

Figure 1: Foam formation during shallow frying of onion pieces, at the beginning of the onion frying process. On the left side of the pan Composition A ('A') and on the right side Composition C ('C') was used as liquid frying medium. For the ingredients of Composition A and C see Table 1.
Figure 2: Shallow frying of onions as in Figure 1 a few minutes later during the middle of the frying process.
Figure 3: Shallow frying of onions as in Figure 2 a few minutes later still, during the end of the frying process.

### Detailed description

Weight percentage (wt. %) is based on the total weight of the product unless otherwise stated. It will be appreciated that the total weight amount of ingredients will not exceed 100 wt. % based on total weight of the product.

The terms 'fat' and 'oil' are used interchangeably. Where applicable the prefix 'liquid' or 'solid' is added to indicate if the fat or oil is liquid or solid at ambient temperature as understood by the person skilled in the art. Ambient temperature is considered to be a temperature of about 20 degrees Celsius. Hardstock fat (a.k.a. structuring fat) refers to a fat that is solid at ambient temperature as understood by the person skilled in the art. Fat as used in the present invention refers to edible triglyceride based fat as understood by the person skilled in the art. The terms `triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated.

### Milk fat fraction

The milk fat (also referred to as butter fat) fraction is fat which originates from milk, preferably cow's milk. Milk fat fractions may be obtained by milk fat fractionation techniques as known to the person skilled in the art. Such fractionation techniques typically involve maintaining the fat at a certain condition (e.g. specific temperature) at which part of the fat is liquid and part of the fat is crystallized; and subsequently separating the solid (crystallized) fraction (sometime called stearine fraction) from the liquid fraction (sometime called olein fraction). Fractionation may occur in multiple steps (e.g. leading to olein-olein fractions) and/or at different conditions (e.g. different temperatures) to obtain fat fractions having specific characteristics such as specific melting profile.

Using conventional fractionation techniques, milk fat fractions can be obtained having a melting point of at most 20 degrees Celsius, or optionally lower such as at most 15, 10 or 5 degrees Celsius. Such milk fat fractions are at least substantially liquid at ambient temperature.

Milk fat fractions of a specific (slip) melting point or melting profile can also be commercially obtained. For example, both Friesland Campina and CORMAN (ACTRON Industries Inc.) have offered (anhydrous) milk fat fractions of such low melting points for sale.

Preferably the frying medium according to the invention comprises from 3 to 12 wt. %, more preferably from 4 to 10 wt. % and even more preferably from 5 to 9 wt. % of milk fat fraction with a melting point of at most 20 degrees Celsius.

### Liquid vegetable oil

The liquid frying medium comprises at least 70 wt. % of liquid vegetable oil, as understood by the skilled person at ambient temperature. The liquid vegetable oil according to the invention may be a single oil or a mixture of different oils. The liquid vegetable oil preferably comprises unmodified vegetable oil such as soybean oil, sunflower oil, linseed oil, low erucic rapeseed oil (Canola), corn oil (maize oil), olive oil, algae oil and blends of vegetable oils, and more preferably comprises sunflower oil, rapeseed oil or a combination thereof. For the purpose of this invention algae oil is considered a vegetable oil.

Preferably the frying medium according to the invention comprises at least 75 wt. %, more preferably at least 85 wt. % and even more preferably at least 90 wt. % of liquid vegetable oil.

### Hardstock fat

The liquid frying medium according to the invention may comprise hardstock fat. The presence of a small amount of hardstock fat can retain transparency and fluidity of the liquid frying medium while it is also considered to improve the anti-spattering capacity after prolonged storage, in particular of the upper-layer (i.e. up and down being defined as determined by the direction of gravity during storage).

The hardstock fat may be a single fat or a mixture of different fats. The hardstock fat may be fat of vegetable, animal or marine origin, or mixtures thereof. Preferably at least 50 wt. % of the hardstock fat (based on total amount of hardstock fat) is of vegetable origin, more preferably at least 70 wt. % and even more preferably at least 90 wt.%. Still even more preferably the hardstock fat essentially consists of hardstock fat of vegetable origin. The hardstock fat may be modified fat, such as fat which is produced by fractionation, hydrogenation and/or interesterification. In particular fractionation and hydrogenation can be used to alter the melting profile and N-line profile of a fat. Preferably the hardstock fat is derived from fully hydrogenated vegetable oil and fat and more preferably is fully hydrogenated rapeseed oil. Preferably the hardstock fat has a melting point above 50 degrees Celsius and more preferably above 60 degrees Celsius.

Preferably the frying medium according to the invention comprises from 0.2 to 5 wt. %, more preferably from 0.5 to 4 wt. %, even more preferably from 1.0 to 3 wt. % and still even more preferably from 1.5 to 2.5 wt. % of hardstock fat.

The solid fat content (SFC) can be expressed as N-value, as defined in Fette, Seifen Anstrichmittel 80 180-186 (1978). Preferably the hardstock fat according to the invention has a solid fat content N10 of at least 90, a N20 of at least 80 and an N35 of at least 40.

When using hardstock fat, such as fully hydrogenated hardstock fats, in the liquid frying medium according to the invention, occasionally undesirable viscosity increases were observed. The viscosity increases were in particular observed after temperature cycling brought on by taking the product in-and-out of the fridge (typically about 4 degrees Celsius) for storage, for use at ambient temperatures. It is considered that use of milk fat fractions having lower melting points reduce the occurrence and degree of the viscosity increases of the frying medium when subjected to heat cycling.

Therefore preferably the milk fat fraction according to the invention has a melting point of at most 15 degrees Celsius, more preferably of at most 10 degrees Celsius, even more preferably of at most 7 degrees Celsius and still even more preferably of at most 6 degrees Celsius.

### Water-phase

The water-phase, if present, is prepared according to the standard way in accordance with the chosen ingredients as understood by the person skilled in the art. It is observed that liquid frying medium according to the invention, having a lower amount of water-phase shows further reduced foaming during pre-heating and frying and, in general, a more transparent appearance (e.g. more like refined olive and sunflower oil). Therefore, preferably the liquid frying composition according to the invention comprises at most 2 wt. %, more preferably at most 1 wt. % and even more preferably essentially no water-phase.

### Particulate anti-spattering agent

The fat continuous product according to the invention comprises from 0.1 to 1.2 wt. %, preferably from 0.3 to 1.0 wt. %, more preferably from 0.4 to 0.9 wt. % and even more preferably from 0.5 to 0.8 wt. % of particulate anti-spattering agent.

With the term 'particulate' is meant that the anti-spattering agent is present in the fat continuous frying medium at least partly in the form of particulates. Preferably at least 70 wt. %, more preferably at least 90 wt. %, based on the total weight of the anti-spattering agent, and still even more preferably essentially all of the anti-spattering agent is present in the form of particulates. Said particulates are present at ambient storage conditions, but also when the product is heated, such as to 110 degrees Celsius. The presence of such particles can be detected by techniques known in the art, such as by sedimentation, filtration and/or centrifugation.

In contrast, the anti-spattering emulsifiers according to the invention (e.g. lecithin, mono-, diglycerides and citric acid esters) typically completely dissolve in the liquid frying medium at increased temperatures.

The anti-spattering particulate agent may be of a single type of anti-spattering agent (e.g. soy flour) or of a mixture of different types of anti-spattering agents (e.g. salt and soy flour). Preferably the anti-spattering particulate agent has a (average) volume weighted mean diameter from 50 nm to 1 mm.

Salt, such as sodium chloride, is a known anti-spattering agent and forms insoluble particulates in oil. Preferably the particulate anti-spattering agent used in the liquid frying medium according to the invention is salt, more preferably is selected from potassium salts, sodium salts, choline salts, ammonium salts, calcium salts and combinations thereof; and even more preferably is selected from potassium chloride, sodium chloride, choline choride, and combinations thereof. However in case sodium chloride is used in the composition according to the invention, preferably at most 1.0 wt. % is used.

Still even more preferably the anti-spattering particulate agent is sodium chloride in the form of micronized salt. Micronized sodium chloride particulates have an average size distribution from <0.025 to 0.0.03 mm (based on SAM 721.04 size analysis). Such micronized salt is commercially available under the trade name SUPRASEL^{R} MICROZO MICROFINESALT (Supplier: Akzo Nobel Salt Specialties).

Porous powdered vegetable matter is another known anti-spattering agent, such as described in WO 2005/058067 and WO2008/074593.

It is considered that the use of particulate anti-spattering agent allows lower amounts of anti-spattering emulsifier to be effective in providing good anti-spattering behaviour, and thus also has a beneficial effect on foam reduction.

### Anti-spattering emulsifier

The anti-spattering emulsifier according to the invention is selected form lecithin, monoglycerides, diglycerides, citric acid esters or combinations thereof. All these emulsifiers are known to the person skilled in the art and are commercially available.

Lecithin is a collective name of products which consist of a few well-defined substances and many more or less well-defined substances in varying amounts. Common non-purified lecithin (crude lecithin) typically consists of about one half or more of phospholipids. Other substances present in crude lecithin are fats (typically about 35 wt. %), free fatty acids, glycolipids, tocopherols, sterols and carbohydrates. Lecithin may be treated, such as by hydrogenation or hydrolysation, to alter the HLB-value. It was found that use of a lecithin in the process of the invention with a HLB value of from 8 to 16 improved the stability of the W/O emulsions made and reduced batch-to-batch variation in stability. Preferably the HLB value of the lecithin used in the process according to the invention is from 8 to 16, more preferably from 10 to 14. Lecithin according to the invention is commercially available, for example under the trade name Bolec ZT, Cetinol, Sunlec Z, or Sunlec M, which are commercially available from (Unimills B.V., the Netherlands). Preferably the lecithin used in the process according to the invention is Bolec ZT, Cetinol, Sunlec Z or Sunlec M, or any combination thereof; and more preferably is Bolec Z. Preferably the anti-spattering emulsifier according to the invention comprises at least 50 wt. % more preferably at least 75 wt. % and even more preferably at least 95 wt. % of lecithin, based on the total weight of anti-spattering emulsifier.
Monoglycerides and diglycerides are molecules comprising a glycerol moiety esterified to a single, respectively two fatty acid residues. Generally mono-, and or diglycerides can be characterized by the tail-length and the degree of unsaturation of their fatty acid residue. The mono-, and or diglycerides used in the process of the invention may be a single type or a mixture of different types of mono-, and or diglycerides. mono-, and or diglycerides according to the invention are commercially available, for example under the trade name Dimodan HP (98 wt. % of saturated fatty acid residues; Supplier: Danisco), Dimodan RT (20 wt. % of saturated fatty acid residues; Supplier: Danisco) or Dimodan U/J (15 wt. % of saturated fatty acid residues; Supplier: Danisco).

Citric acid and a monoglyceride (monoester of glycerol and a fatty acid) or diglyceride (di-ester of glycerol and two fatty acids) can form an ester under certain reaction conditions. The resulting reaction product mainly comprises citric acid, wherein one carboxylic group is esterified with one of the free hydroxyl groups of the glycerol backbone of the mono- or diglyceride. Some di- or even tri-esterified citric acid may be present in the resulting reaction mixtures, depending on the specific reaction conditions used such as temperature and reaction time. According to a preferred aspect of the invention the ester is a citric acid ester of a monoglyceride and diglyceride mixture, comprising at least 30 wt% of the monoglyceride, more preferred at least 55 wt%, most preferred at least 90 wt% of the monoglyceride. Citric acid esters are commmercialy available under the tradenames Grindstedtm CITREM LR 10, Grindstedtm CITREM BC-FS, Lamegin ZE 306, Myvatem SC, CITREM 2931, Pålsgaard 3301, Lamegin ZE 309 liquid.

### Protein

Natural butter and many frying media comprise added or naturally present (dairy) protein. These can function to stabilize the water-phase and improve browning of the fried food product. Most frequently used are proteins derived from (or added in the form of) full milk powder, skimmed milk powder, butter milk powder and sweet whey powder.

It is considered that the presence of (dairy) protein promotes the occurrence and degree of foaming during pre-heating of the frying medium and during frying. Furthermore the presence of protein is believed to increase the sensitivity of the frying medium to exhibit burnt smell and appearance at higher frying temperatures (e.g. 200 degrees Celsius). Therefore the frying medium according to the invention comprises at most 0.5 wt. %, preferably at most 0.4 wt. %, more preferably at most 0.2 wt. %, even more preferably at most 0.1 wt. % and still even more at most 0.05 wt. % of (dairy) protein.

### Method for preparation of the product

The liquid edible oil-continuous frying media can be made according to known techniques in the art using conventional equipment in the art of food (emulsion) making. The process to manufacture the liquid frying medium according to the invention essentially involves combining all the ingredients, optionally heating to dissolve fat-soluble ingredients, and mixing to provide a homogenous liquid frying medium.

For example, when hardstock fat is used (and/or other fat soluble ingredients which are solid at ambient temperature), the process typically comprises the step of mixing such ingredients with all or part of the vegetable oil and/or milk fat fraction at a temperature at which these (e.g. the hardstock fat) are definitely liquid.

Mixing of ingredients may be achieved by any suitable mixers known in the art such as by scraped surface heat exchanger (also known as A-units), pin-stirrers (also known as C-unit) and/or fluid dynamic mixers (e.g. as described in EP1331988B1).

### Use

It was observed that the milk fat fraction with a melting point of at most 20 degrees Celsius can be used to reduce foam formation, such as in frying media during shallow-, stir-, and/or deep frying. Thus the invention further relates to the Use of the milk fat fraction with a melting point of at most 20 degrees Celsius to reduce foam formation (i.e. as anti-foaming agent). Preferably the milk fat fraction according to the invention is used to reduce foaming in liquid oil continuous systems, more preferably in liquid oil continuous systems comprising emulsifiers, and even more preferably in liquid oil continuous systems which are subjected to temperatures above the boiling point of water and in the presence of water (e.g. during frying).

The invention is now illustrated by the following non limiting examples.

### Examples

### Production of liquid frying media

In order to examine the impact of milk fat fraction having a melting point of at most 20 degrees Celsius on foaming in the presence of lecithin, compositions were made as set out in Table 1. These liquid frying media were made by combining ingredients in a pan and mixing by hand.

**Table 1. Ingredient of Compositions A, B and C, Numbers represent parts by weight.**

| | Composition A | Composition B | Composition C |
|---|---|---|---|
| Sunflower oil | - | 49.8 | 99.6 |
| ¹AMF5 | 99.6 | 49.8 | - |
| ²Bolec ZT | 0.4 | 0.4 | 0.4 |

| | | | |
|---|---|---|---|
| ¹ AMF5 (Supplier: Friesland Campina) is fractionated anhydrous milk fat with a melting point (drop point) of 5 degrees Celsius. ² Bolec ZT (Supplier: Unimills B.V., the Netherlands) is a lecithin-based emulsifier | | | |

### Results

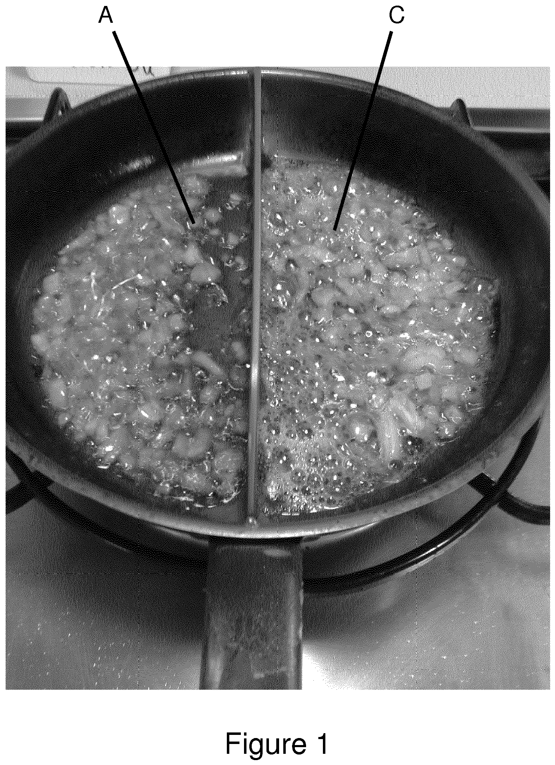

To test the foaming behavior of the liquid frying medium according to Compositions A, B or C, a sample of about 25 ml liquid frying medium, was heated in a pan to a temperature of 140 degrees Celsius. Next, 25 grams of finely chopped onion was added to the pan and immediately stirred until evenly spread on the pan surface (see Figures 1, 2 and 3). The frying process was visually monitored and photographic pictures taken.

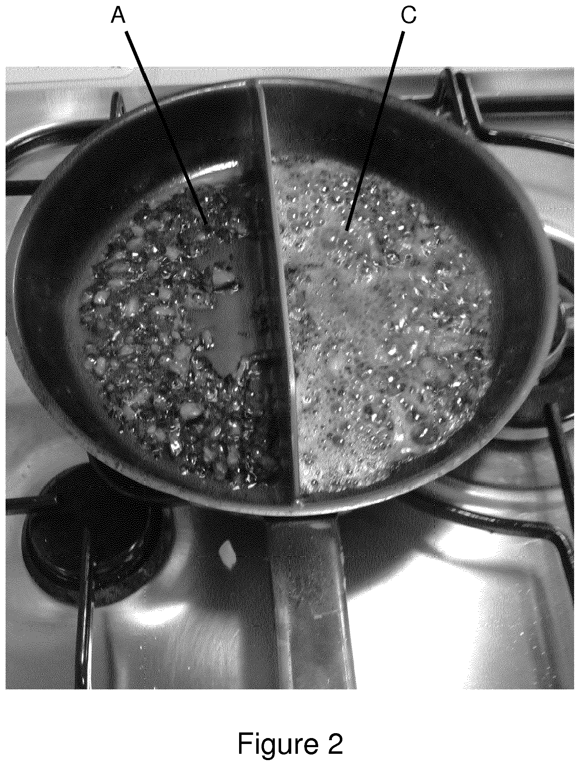

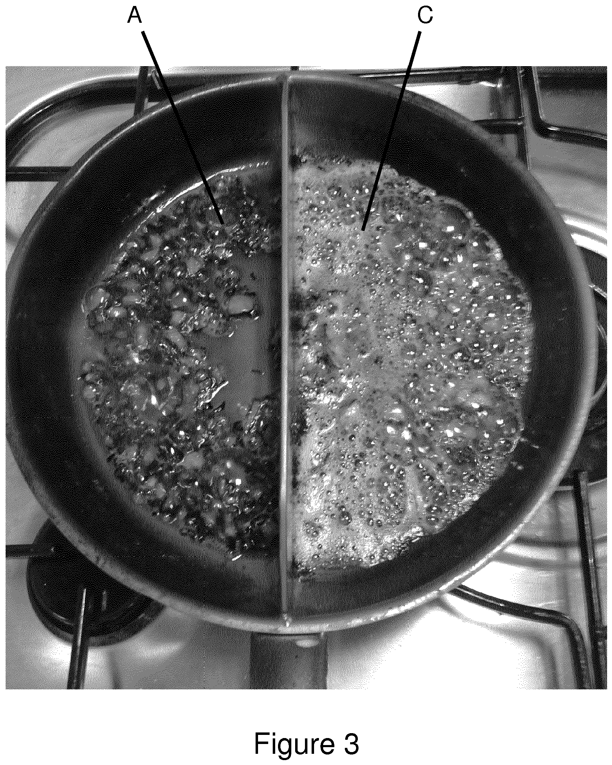

Compositions A and B behaved similar to refined pure vegetable oil (with no added lecithin) in the sense that only tiny very unstable (frying) bubbles appeared where the onion pieces were in direct contact with the hot frying medium. No foam or persistent foam was observed throughout the frying process (See Figure, 1, 2 and 3 with regards to frying with Composition A ('A'). Only a small amount of foaming was observed for Composition B. However in the case of Composition C, shortly after addition of the onion pieces (Figure 1, 'B') a thick and stable foam was seen to develop. This foam got thicker and persisted during the frying process which lasted about 5 minutes (Figure 2 'B' and Figure 3 'C'). The foam even persisted after the frying pan was removed from the fire and left to cool, wherein it was seen that the onions and frying medium were covered in a film of coarse as well as fine white foam.

Clearly the addition of milk fat fraction with a melting point of at most 20 degrees Celsius will reduce undesired foaming in vegetable oil to which an anti-spattering emulsifier, such as lecithin is added.

## Claims

1. Liquid edible oil continuous frying medium comprising:
• from 2 to 15 wt. % of milk fat fraction with a melting point of at most 20 degrees Celsius;
• at least 70 wt. % of liquid vegetable oil;
• from 0.1 to 0.55 wt. % of anti-spattering emulsifier;
• from 0.1 to 1.2 wt. % of particulate anti-spattering agent;
• at most 3 wt. % of water-phase;
• at most 0.5 wt. % of protein,
wherein the anti-spattering emulsifier is selected from lecithin, monoglycerides, diglycerides, citric acid esters or combinations thereof.

2. Frying medium according to claim 1, comprising at least 75 wt. %, preferably at least 85 wt. % and more preferably at least 90 wt. % of liquid vegetable oil.

3. Frying medium according to claim 1 or claim 2, comprising from 3 to 12 wt. %, preferably from 4 to 10 wt. % and more preferably from 5 to 9 wt. % of milk fat fraction with a melting point of at most 20 degrees Celsius.

4. Frying medium according to any one of claims 1 to 3, further comprising from 0.2 to 5 wt. %, preferably from 0.5 to 4 wt. %, more preferably from 1.0 to 3 wt. % and still even more preferably from 1.5 to 2.5 wt. % of hardstock fat.

5. Frying medium according to any one of claims 1 to 4, comprising milk fat fraction having a melting point of at most 15 degrees Celsius, preferably of at most 10 degrees Celsius, more preferably of at most 7 degrees Celsius and even more preferably of at most 6 degrees Celsius.

6. Frying medium according to any one of claims 1 to 5, comprising at most 2 wt. %, preferably at most 1 wt. % and even more preferably essentially no water-phase.

7. Frying medium according to any one of claims 1 to 6, comprising from 0.3 to 1.0 wt. %, preferably from 0.4 to 0.9 wt. % and more preferably from 0.5 to 0.8 wt. % of particulate anti-spattering agent.

8. Frying medium according to any one of claims 1 to 7, wherein the anti-spattering emulsifier comprises at least 50 wt. %, preferably at least 75 wt. % and more preferably at least 95 wt. % of lecithin, based on the total weight of anti-spattering emulsifier.

9. Frying medium according to any one of claims 1 to 8, comprising at most 0.4 wt. %, preferably at most 0.2 wt. %, more preferably at most 0.1 wt. % and even more preferably at most 0.05 wt. % of protein.

10. Use of the milk fat fraction with a melting point of at most 20 degrees Celsius to reduce foam formation in frying media during shallow-, stir-, and/or deep frying.

## Patentansprüche

1. Flüssiges verzehrbares Öl-kontinuierliches Bratmedium, umfassend:
• von 2 bis 15 Gew.-% Milchfettfraktion mit einem Schmelzpunkt von höchstens 20 Grad Celsius,
• mindestens 70 Gew.-% flüssiges Pflanzenöl,
• von 0,1 bis 0,55 Gew.-% eines Antispritzemulgators,
• von 0,1 bis 1,2 Gew.-% eines partikelförmigen Antispritzmittels,
• höchstens 3 Gew.-% Wasser-Phase,
• höchstens 0,5 Gew.-% Protein,
wobei der Antispritzemulgator aus Lecithin, Monoglyceriden, Diglyceriden, Citronensäureestern oder Kombinationen davon ausgewählt ist.

2. Bratmedium nach Anspruch 1, umfassend mindestens 75 Gew.-%, vorzugsweise mindestens 85 Gew.-% und bevorzugter mindestens 90 Gew.-% flüssiges Pflanzenöl.

3. Bratmedium nach Anspruch 1 oder Anspruch 2, umfassend von 3 bis 12 Gew.-%, vorzugsweise von 4 bis 10 Gew.-% und bevorzugter von 5 bis 9 Gew.-% Milchfettfraktion mit einem Schmelzpunkt von höchstens 20 Grad Celsius.

4. Bratmedium nach irgendeinem der Ansprüche 1 bis 3, des Weiteren umfassend von 0,2 bis 5 Gew.-%, vorzugsweise von 0,5 bis 4 Gew.-%, bevorzugter von 1,0 bis 3 Gew.-% und sogar noch bevorzugter von 1,5 bis 2,5 Gew.-% Hardstock-Fett.

5. Bratmedium nach irgendeinem der Ansprüche 1 bis 4, umfassend Milchfettfraktion mit einem Schmelzpunkt von höchstens 15 Grad Celsius, vorzugsweise von höchstens 10 Grad Celsius, bevorzugter von höchstens 7 Grad Celsius und sogar bevorzugter von höchstens 6 Grad Celsius.

6. Bratmedium nach irgendeinem der Ansprüche 1 bis 5, umfassend höchstens 2 Gew.-%, vorzugsweise höchstens 1 Gew.-% und sogar bevorzugter im Wesentlichen keine Wasser-phase.

7. Bratmedium nach irgendeinem der Ansprüche 1 bis 6, umfassend von 0,3 bis 1,0 Gew.-%, vorzugsweise von 0,4 bis 0,9 Gew.-% und bevorzugter von 0,5 bis 0,8 Gew.-% eines partikelförmigen Antispritzmittels.

8. Bratmedium nach irgendeinem der Ansprüche 1 bis 7, wobei der Antispritzemulgator mindestens 50 Gew.-%, vorzugsweise mindestens 75 Gew.-% und bevorzugter mindestens 95 Gew.-% Lecithin, basierend auf dem Gesamtgewicht des Antispritzemulgators, umfasst.

9. Bratmedium nach irgendeinem der Ansprüche 1 bis 8, umfassend höchstens 0,4 Gew.-%, vorzugsweise höchstens 0,2 Gew.-%, bevorzugter höchstens 0,1 Gew.-% und sogar bevorzugter höchstens 0,05 Gew.-% Protein.

10. Verwendung der Milchfettfraktion mit einem Schmelzpunkt von höchstens 20 Grad Celsius zur Verminderung der Schaumbildung in Bratmedien während des Flachbratens, des Bratens unter Rühren und/oder des Frittierens.

## Revendications

1. Milieu de friture continu d'huile comestible liquide comprenant :
• de 2 à 15 % en masse d'une fraction de matière grasse laitière avec un point de fusion d'au plus 20 degrés Celsius ;
• au moins 70 % en masse d'huile végétale liquide ;
• de 0,1 à 0,55 % en masse d'émulsionnant anti-éclaboussure ;
• de 0,1 à 1,2 % en masse d'agent anti-éclaboussure particulaire ;
• au plus 3 % en masse de phase d'eau ;
• au plus 0,5 % en masse de protéine,
dans lequel l'émulsionnant anti-éclaboussure est choisi parmi la lécithine, des monoglycérides, diglycérides, esters d'acide citrique ou combinaisons de ceux-ci.

2. Milieu de friture selon la revendication 1, comprenant au moins 75 % en masse, de préférence au moins 85 % en masse et bien mieux encore au moins 90 % en masse d'huile végétale liquide.

3. Milieu de friture selon la revendication 1 ou la revendication 2, comprenant de 3 à 12 % en masse, de préférence de 4 à 10 % en masse et encore mieux de 5 à 9 % en masse de fraction de matière grasse laitière avec un point de fusion d'au plus 20 degrés Celsius.

4. Milieu de friture selon l'une quelconque des revendications 1 à 3, comprenant de plus de 0,2 à 5 % en masse, de préférence de 0,5 à 4 % en masse, encore mieux de 1,0 à 3 % en masse et bien mieux encore de préférence de 1,5 à 2,5 % en masse de matière grasse solide.

5. Milieu de friture selon l'une quelconque des revendications 1 à 4, comprenant une fraction de matière grasse laitière ayant un point de fusion d'au plus 15 degrés Celsius, de préférence d'au plus 10 degrés Celsius, encore mieux d'au plus 7 degrés Celsius et bien mieux encore d'au plus 6 degrés Celsius.

6. Milieu de friture selon l'une quelconque des revendications 1 à 5, comprenant au plus 2 % en masse, de préférence au plus 1 % en masse et encore mieux essentiellement pas de phase d'eau.

7. Milieu de friture selon l'une quelconque des revendications 1 à 6, comprenant de 0,3 à 1,0 % en masse, de préférence de 0,4 à 0,9 % en masse et encore mieux de 0,5 à 0,8 % en masse d'agent anti-éclaboussure particulaire.

8. Milieu de friture selon l'une quelconque des revendications 1 à 7, dans lequel l'émulsionnant anti-éclaboussure comprend au moins 50 % en masse, de préférence au moins 75 % en masse et bien mieux encore au moins 95 % en masse de lécithine, rapporté à la masse totale d'émulsionnant anti-éclaboussure.

9. Milieu de friture selon l'une quelconque des revendications 1 à 8, comprenant au plus 0,4 % en masse, de préférence au plus 0,2 % en masse, encore mieux au plus 0,1 % en masse et bien mieux encore au plus 0,05 % en masse de protéine.

10. Utilisation de la fraction de matière grasse laitière avec un point de fusion d'au plus 20 degrés Celsius pour réduire la formation de mousse dans des milieux de friture pendant une friture sautée, au wok et/ou une grande friture.
